# EUROPEAN PATENT APPLICATION

(11) **EP 2 930 351 A1**
(43) Date of publication of application: **14.10.2015**
(21) Application number: 14164237.1
(22) Date of filing: 10.04.2014
(51) Int. Cl.: F03D 1/06

(54) **A method for applying a coating to a surface of wind turbine blade**

(71) Applicant: LM WP Patent Holding A/S, 6000 Kolding (DK)
(72) Inventor: Haag, Michael Drachmann, 6710 Esbjerg (DK); Dahl, Martin, 24939 Flensburg (DE); Rebollo, Lorenzo Réal, 6000 Kolding (DK)
(74) Representative: Hussey, Paul Anthony

(57) **Abstract**

A system and method for the application of a coating material to a surface of a wind turbine blade is described, where reflective elements are incorporated into the coating process. The reflective elements allow for accurate measurement of both wet and dry film thicknesses of the coating material, to provide for improved quality control of the coating process.

## Description

### Field of the Invention

The present invention relates to a method for applying a coating to a portion of the surface of a wind turbine blade, and associated apparatus.

### Background of the Invention

External coatings are applied to the surface of wind turbine blades, both to improve the external appearance of such blades, as well as to provide erosion protection for the blades, which may be exposed to a variety of adverse weather conditions. Such coatings are typically applied as a wet coating layer to a surface of the blade, which is allowed to cured to a hardened state.

In one aspect, it is important that at least a minimum level of coating material is applied to the blade surface, to ensure that the erosion protection is at a sufficient performance level and quantity level to last for a significant portion of the operational lifetime of the blade. Furthermore, it is important not to apply too much coating material, as this can increase the total weight of the finished blade, as well as the cost of the total material used in the blade manufacture.

While it is possible to monitor the total volume of coating material consumed during the application process, it is also preferable to measure the thickness of the coating material layer. Prior art processes rely on the use of wet film thickness gauges, for example as sold by Zehntner GmbH Testing Instruments, to measure the thickness of the wet coating layer.

Such wet film thickness gauges provide a plurality of comb teeth corresponding to different lengths, which can be pressed into the wet layer to determine the depth of the coating layer. However, such gauges are normally provided with differences in teeth length of the order of -25-50 microns, and accordingly do not provide a high degree of granularity for the measurements of thickness level required for blade coatings. In addition, as such gauges provide a point-based measurement of layer depth by penetrating the surface, care needs to be taken by operators so as to not disturb the greater coating area when using such gauges, while the actual measurement location will require correction once the measurement is performed.

A further limitation of the use of wet film thickness gauges is that, due to the chemical composition of some coatings, solvent evaporation and shrinkage can occur as the wet coating layer cures. As a result, unless the coating environment is very precisely controlled, the finished dry coating layer can have a reduced thickness relative to the initially applied wet coating layer. There is currently no accurate, non-destructive method for measuring the thickness of the dry coating layer. Either a destructive measurement process is performed, or rather the finished thickness is estimated, based on historical experience and testing of similar coating processes.

In addition, if repairs or additional layers of coating material have to be applied to a cured coating layer on the surface of a blade, there is no reliable way of determining the eventual total coating thickness on the blade, without completely removing the existing coating material from the blade surface and starting with a new wet coating layer.

It is an object of the invention to provide a method and apparatus for coating a wind turbine blade that addresses the above problems.

### Summary of the Invention

Accordingly, there is provided a method of applying a coating to a surface of a wind turbine blade, the method comprising the steps of:
providing a surface of a wind turbine blade to receive a coating;
applying a wet coating layer to said surface; and
allowing said wet coating layer to cure to a dry coating layer,
wherein the method further comprises the steps of:
applying a reflective element to said surface prior to said step of applying a wet coating layer; and
measuring a thickness of a blade coating using said reflective element.

By applying a reflective element beneath the coating layer, the coating thickness can be quickly and easily measured using non-destructive-testing measurements, e.g. ultrasonic scanning, electromagnetic testing, etc.

Preferably, the method comprises the steps of:
measuring a thickness of said wet coating layer, prior to a curing of said wet coating layer; and
measuring a thickness of said dry coating layer.

The use of an embedded reflective element in the coating process allows for the measurement of both a wet film thickness and a dry film thickness of the blade coating. As the coating thickness can be continually monitored both during and after the coating procedure, any variations in coating thickness due to improper application and/or environmental conditions can be immediately identified and corrected. In addition, such details can be easily stored to provide a process record for the coating operation for each blade. Accordingly, a relatively high level of quality control of the coating operation can be maintained for the entire coating operation.

This method provides advantages over prior art wet film thickness gauges, as the same method can be used for both wet and dry film thickness measurements. In addition, the accuracy of the measurement method used is improved, relative to the prior art methods.

Preferably, the coating comprises a polymer material, preferably a polyurethane coating material.

Preferably, said coating layer is applied to an area at the leading edge of a wind turbine blade.

Preferably, said step of allowing said wet coating layer to cure comprises curing said coating layer. The coating may be arranged to cure at room temperature. Alternatively, the coating can be cured by heating said wet coating layer.

Preferably, the method further comprises the steps of:
if a measured thickness is less than a defined minimum thickness threshold, applying additional coating material to said blade until the thickness exceeds said defined minimum thickness threshold.

Additionally or alternatively, the method comprises the steps of:
if a measured thickness is greater than a defined maximum thickness threshold, removing excess coating material from said blade until the thickness is less than said defined maximum thickness threshold.

It will be understood that said defined minimum thickness threshold and/or said defined maximum thickness threshold may vary based on the location on the surface of the wind turbine blade to which coating is being applied. It will be understood that the desired coating thickness may be thinner in the areas adjacent the leading edge of the blade, when compared with the coating thickness at the blade leading edge.

Preferably, the coating thickness is between the range of 0.1-2mm, preferably between the range of 0.3-1 mm.

Preferably, the minimum thickness level of the coating at the leading edge of the blade is selected to be at least 0.3mm.

Preferably, the maximum thickness level of the coating for the areas adjacent the leading edge of the blade is between 0.05-0.3mm.

Preferably, the method comprises the step of applying a plurality of wet coating layers, wherein said step of measuring a thickness of a blade coating is performed after application of each layer of said plurality of layers.

If the coating layer is applied as a multi-layer process, measuring the thickness of the combined layers after each application ensures that the coating process is continually monitored for variations in coating layer thickness. Preferably, a succeeding layer of said plurality of wet coating layers is applied after the preceding layer of said plurality of layers has cured. Preferably, the method comprises applying three layers of coating material.

Preferably, the method comprises the step of providing a reflective element as a metallic film or foil, preferably aluminium foil.

Preferably, said reflective element is provided as a film or foil having an adhesive provided on a surface of said film or foil, wherein said adhesive is used to attach said film or foil to said surface of the wind turbine blade.

Preferably, the adhesive comprises a pressure-sensitive adhesive, preferably a pressure-sensitive acrylic adhesive.

Preferably, the method comprises the step of providing a plurality of discrete reflective elements, preferably spaced along a length of said surface.

While the reflective element may be provided as a single element extending along a portion of the length of the blade, providing the reflective element as a plurality of discrete elements reduces the risk of the reflective element acting as a lightning receptor, and reduced the total reflective material used in the blade assembly process.

Preferably, said plurality of discrete reflective elements are provided having a maximum size, wherein said maximum size is dimensioned so that said reflective elements do not act as lightning receptors.

By providing the elements as relatively small items incorporated into the blade structure, and not exposed on the surface of the blade, accordingly the elements will not interfere with any lightning protection system provided as part of the blade.

Preferably, said plurality of discrete reflective elements are provided having a maximum size of 25 x 10-6 m2, preferably approximately 4 x 10-6 m2.

Preferably, said plurality of discrete reflective elements are provided as substantially circular foil pieces having a diameter of between approximately 20-50 mm.

Preferably, said plurality of discrete reflective elements are provided as foil pieces having a thickness of less than approximately 0.1 mm, preferably less than 0.05 mm.

Preferably, said plurality of discrete reflective elements are provided such that the spacing between adjacent elements along the length of the blade is selected so that said reflective elements do not provide a conductive or ionizing path along the length of the blade.

By spacing the elements from each other, the number of elements used for a coating operation decreases, and furthermore the risk of conductive reflective elements acting as a lightning diverter is practically eliminated.

Preferably, said plurality of discrete reflective elements are provided such that the spacing between adjacent elements along the length of the blade is at least approximately 500mm.

Preferably, said plurality of discrete reflective elements are arranged spaced from the tip end of the wind turbine blade, preferably at least approximately 500mm from the tip end of the blade.

Preferably, said step or providing a plurality of discrete reflective elements comprises providing a tape or strip of reflective material and cutting said tape or strip of reflective material into a plurality of discrete elements.

There is further provided a wind turbine blade having a coating provided on at least a portion of the surface of the wind turbine blade, wherein said coating is applied according to any aspect of the method described above.

Preferably, the wind turbine blade incorporates a reflective element as described above.

There is further provided a wind turbine having at least one wind turbine blade as described above.

### Description of the Invention

Embodiments of the invention will now be described, by way of example only, with reference to the accompanying drawings, in which:
Fig. 1 shows a wind turbine;
Fig. 2 shows a schematic view of a wind turbine blade according to the invention;
Fig. 3 shows a schematic view of an airfoil profile of the blade of Fig. 2;
Fig. 4 shows a schematic view of the wind turbine blade of Fig. 2, seen from above and from the side;
Fig. 5(a) illustrates a perspective view of a portion of the surface of a wind turbine blade to be coated;
Fig. 5(b) illustrates a cross-sectional view of the portion of Fig. 5(a) after a coating layer has been applied; and
Fig. 6 illustrates a cross-sectional view of an enlarged portion of a coating applied according to the invention.

It will be understood that elements common to the different embodiments of the invention have been provided with the same reference numerals in the drawings.

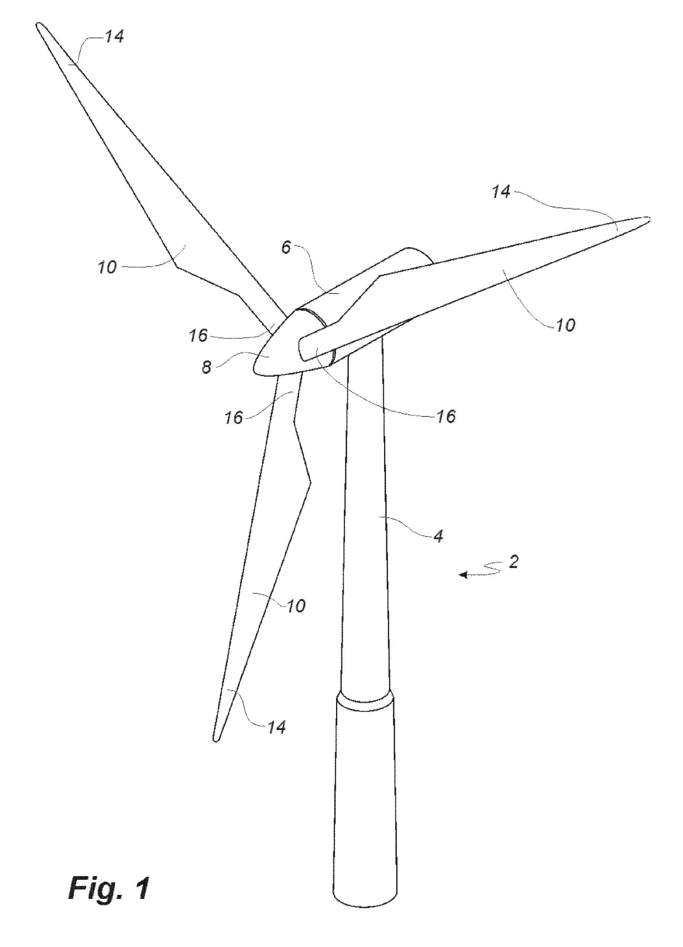

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

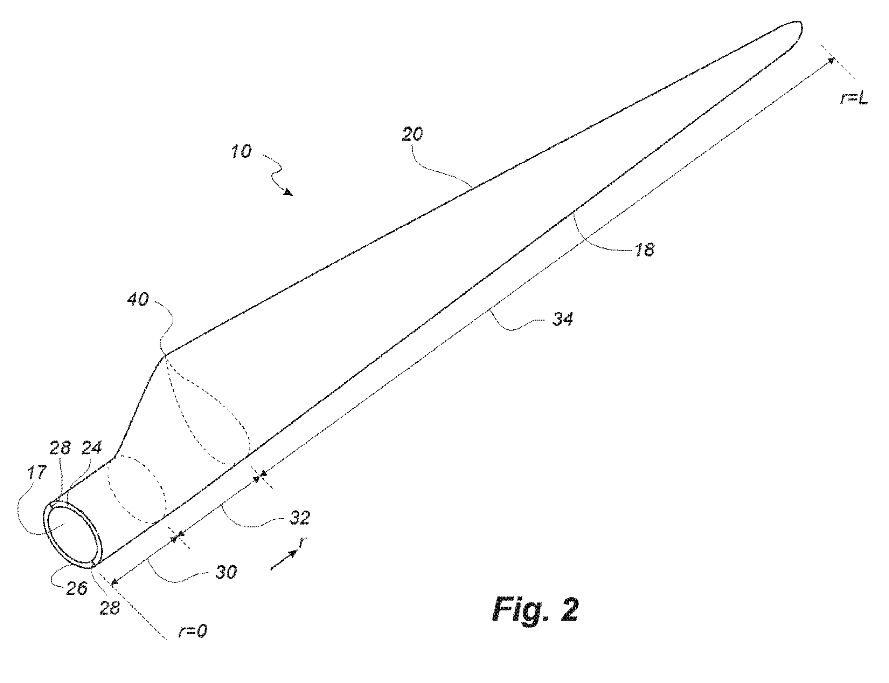

Fig. 2 shows a schematic view of a wind turbine blade 10. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 is typically constant along the entire root area 30. The transition region 32 has a transitional profile 42 gradually changing from the circular or elliptical shape 40 of the root region 30 to the airfoil profile 50 of the airfoil region 34. The chord length of the transition region 32 typically increases substantially linearly with increasing distance *r* from the hub.

The airfoil region 34 has an airfoil profile 50 with a chord extending between the leading edge 18 and the trailing edge 20 of the blade 10. The width of the chord decreases with increasing distance *r* from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

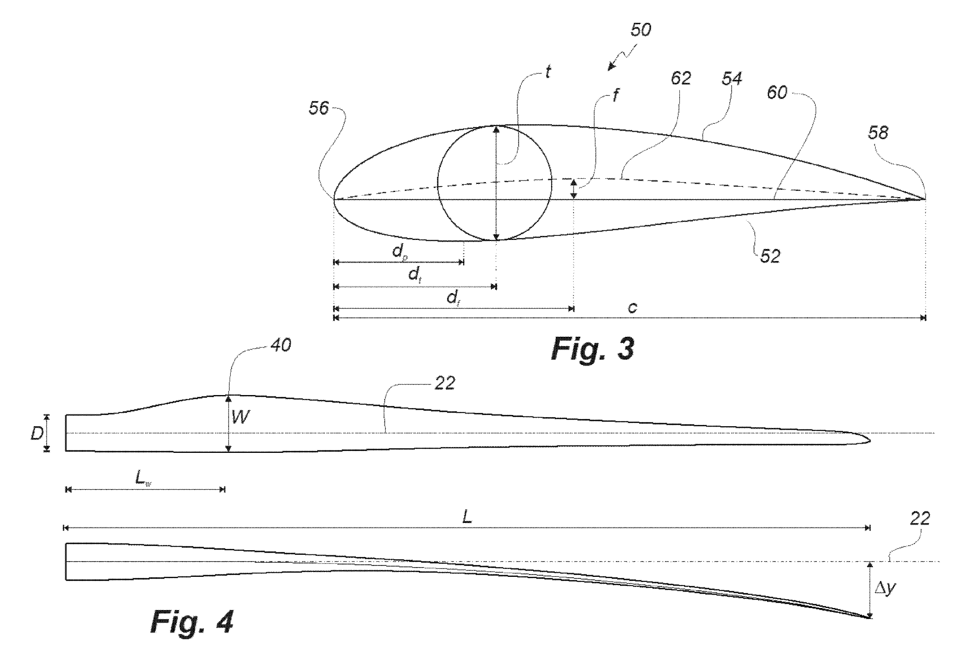

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness *t* of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length *c*, the maximum camber *f*, the position *d_{f}* of the maximum camber *f*, the maximum airfoil thickness *t*, which is the largest diameter of the inscribed circles along the median camber line 62, the position *dₜ* of the maximum thickness *t*, and a nose radius (not shown). These parameters are typically defined as ratios to the chord length *c*. Thus, a local relative blade thickness *t*/*c* is given as the ratio between the local maximum thickness *t* and the local chord length *c*. Further, the position *dₚ* of the maximum pressure side camber may be used as a design parameter, and of course also the position of the maximum suction side camber.

Fig. 4 shows some other geometric parameters of the blade. The blade has a total blade length *L*. As shown in Fig. 2, the root end is located at position *r* = 0, and the tip end located at *r* = *L*. The shoulder 40 of the blade is located at a position *r* = *L_{w}*, and has a shoulder width *W*, which equals the chord length at the shoulder 40. The diameter of the root is defined as *D*. Further, the blade is provided with a prebend, which is defined as Δ*y*, which corresponds to the out of plane deflection from a pitch axis 22 of the blade.

The wind turbine blade 10 generally comprises a shell made of fibre-reinforced polymer, and is typically made as a pressure side or upwind shell part 24 and a suction side or downwind shell part 26 that are glued together along bond lines 28 extending along the trailing edge 20 and the leading edge 18 of the blade 10. Wind turbine blades are generally formed from fibre-reinforced plastics material, e.g. glass fibres and/or carbon fibres which are arranged in a mould and cured with a resin to form a solid structure. Modern wind turbine blades can often be in excess of 30 or 40 metres in length, having blade root diameters of several metres. Wind turbine blades are generally designed for relatively long lifetimes and to withstand considerable structural and dynamic loading.

The wind turbine blade 10 is provided with an external coating or at least a portion of the surface of the blade 10, preferably an erosion-resistant coating. The coating may be applied to any portion of the surface of the blade 10, but is preferably at least applied to surfaces at the leading edge 18 of the blade 10. As the leading edge 18 is the area of the blade 10 which experiences the most erosion damage during turbine operation, the application of erosion-resistant coating in this region provides the greatest long-term benefit for the use of the blade 10.

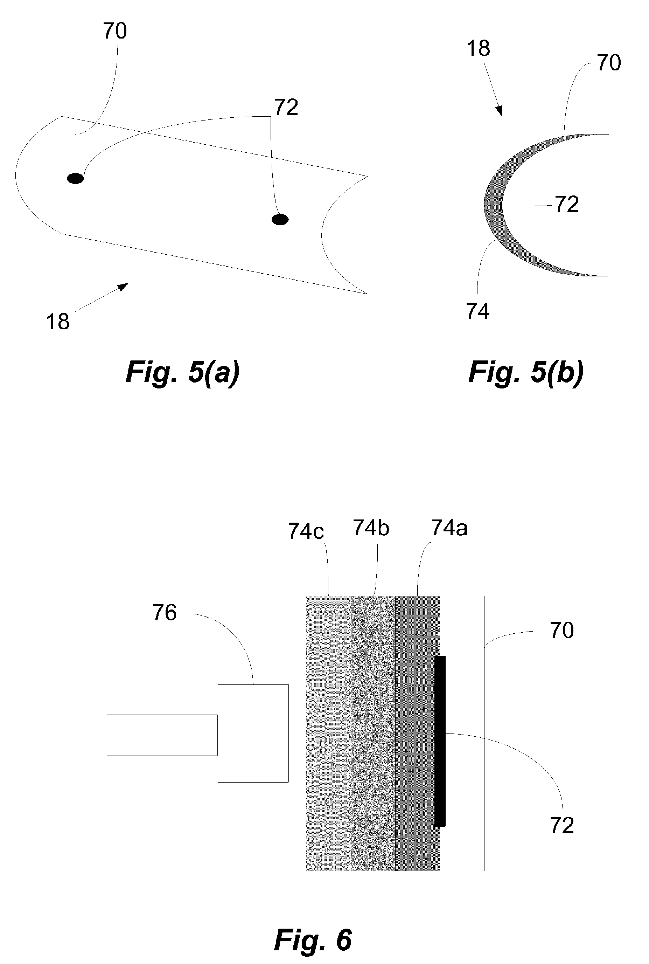

With reference to Fig. 5(a), an enlarged view is shown of a portion of the leading edge 18 of a wind turbine blade 10, the surface 70 of which is to be coated according to the method of the invention. It will be understood that the surface 70 may be treated prior to coating application. In addition, it will be understood that the external blade structure may be configured such that a predefined channel is provided on the blade surface 70, to accommodate the application of any additional surface coating to the blade 10 without affecting the particular blade aerodynamics.

Prior to application of a wet coating layer to the blade surface 70, a plurality of reflective elements 72 are applied to the surface 70 of the blade 10. The reflective elements 72 are formed from a material which allows for easy scanning and detection of location and thickness, after subsequent application of a coating material. Preferably, the reflective elements 72 are formed from a metallic material, for example aluminium.

The reflective elements 72 are preferably provided as relatively thin foil pieces, having a thickness of less than approximately 0.1 mm, preferably less than 0.05 mm, and are preferably of a relatively small size, preferably of the order of 20-50mm diameter, such that the addition of the elements 72 to the blade structure does not significantly impact the blade weight. In addition, the elements 72 are provided on the surface 70 of the blade 10 in a spaced relationship, so that the elements 72 do not affect any lightning protection systems of the blade 10. Preferably, the elements 72 are spaced from each other by a distance of approximately 500mm, and furthermore are spaced from the tip end 14 of the blade 10 by at least 500mm.

It will be understood that the elements 72 may also be provided as a single element, extending in a band along a portion of the blade leading edge 18. Preferably, the elements 72 may be formed by the cutting of a length of reflective tape, e.g. as aluminium tape provided with a pressure-sensitive acrylic adhesive to attach to the surface of the blade 10.

Once the reflective elements 72 have been applied to the blade surface 70, a layer of wet coating material 74 is applied to the surface 70, covering the reflective elements 72 and the surrounding areas of the blade 10, e.g. as in Fig. 5(b). The wet coating material 74 is subsequently cured, to form a hardened layer of coating material on the blade surface 70. The curing of the wet coating material may be performed using any suitable process, e.g. by allowing the coating material to harden in situ, and/or by heating the coating material to a cured state.

The provision of the reflective elements 72 beneath the surface of the wet coating material 74 allows for a thickness measurement of the layer of material 74 before curing, through the use of a suitable scanning device, e.g. an ultrasonic scanning device, an electromagnetic scanning device, etc. Such devices are operable to emit a signal which can be reflected by the reflective elements 72, to determine a thickness measurement of the layer of wet coating material 74. The use of such a non-destructive scanning measurement allows for a relatively high degree of accuracy and ease-of-use, when compared with prior art solutions.

In addition, as the system is operable to provide a thickness measurement of the coating layer without disturbing the coating material itself, the method can be used to confirm the dry film thickness level of the material layer 74, after the wet coating material is allowed to cure.

As the thickness level of the coating material can be accurately measured for all stages of the coating operation, accordingly a relatively high level of quality control of the coating operation can be maintained for the process. In such cases, it can easily be identified if there are variables in the coating process, due to environmental and/or operator conditions, wherein such variables can be subsequently quickly and easily rectified.

In some aspects, the process may be operable to determine if the coating layer 74 reaches a minimum thickness level, and if not, additional coating material can be applied to the blade 10. Similarly, the process may be operable to determine if the coating layer 74 exceeds a maximum thickness level, and if so, excessive coating material can be removed from the blade 10. Such process control may be utilised for instance in embodiments where it is desired to maintain a minimum thickness level of coating at the leading edge 18 of a blade 10, and/or where the coating is preferred to have a reduced thickness, or at least a thickness not exceeding a predefined maximum level, at the areas of the blade 10 extending away from the actual leading edge 18. Such an embodiment can be seen in the cross-sectional view of Fig. 5(b).

In a particularly preferred aspect, the coating to be applied to the blade comprises multiple layers of coating material 74, to provide an enhanced erosion-resistant surface. With reference to Fig. 6, an embodiment is shown wherein an erosion shield for a wind turbine blade 10 is applied as three separate layers 74a,74b,74c of coating material applied to a blade surface 70, wherein at least one reflective element 72 is applied to the surface 70 prior to the application of the first layer 74a of coating material. For the coating process, a first layer 74a of coating material is applied to the blade surface 70 and allowed to cured, and then the next layer 74b of coating material is applied on top of the preceding cured layer 74a. Once the second layer 74b is cured, the third layer 74c is then applied and is itself allowed to cure, to form the outer surface of the coating shield for the blade 10.

In this embodiment, a thickness measurement of the coating layers 74a,74b,74c is performed immediately after the application of the individual layers, using a suitable thickness measurement device 76 to measure the distance to the embedded reflective element 72, to determine the wet film thickness of each layer 74a,74b,74c. A further thickness measurement can be performed after the curing of each individual layer 74a,74b,74c, and prior to the application of the next layer, to confirm the subsequent dry film thickness of the cured layer.

By performing such close monitoring of the layer thicknesses, for both wet and dry film states, the process control of the coating method can be accurately and precisely controlled, thereby providing for improved quality control of the finished product, and a reduction in subsequent repair processes.

The invention is not limited to the embodiments described herein, and may be modified or adapted without departing from the scope of the present invention.

## Claims

1. A method of applying a coating to a surface of a wind turbine blade, the method comprising the steps of:
providing a surface of a wind turbine blade to receive a coating;
applying a wet coating layer to said surface; and
allowing said wet coating layer to cure to a dry coating layer,
wherein the method further comprises the steps of:
applying a reflective element to said surface prior to said step of applying a wet coating layer; and
measuring a thickness of a blade coating using said reflective element.

2. The method of claim 1, wherein the method comprises the steps of:
measuring a thickness of said wet coating layer, prior to a curing of said wet coating layer; and
measuring a thickness of said dry coating layer.

3. The method of claim 1 or claim 2, wherein said coating layer is applied to an area at the leading edge of a wind turbine blade.

4. The method of any preceding claim, wherein the method further comprises the steps of:
if a measured thickness is less than a defined minimum thickness threshold, applying additional coating material to said blade until the thickness exceeds said defined minimum thickness threshold.

5. The method of any preceding claim, wherein the method further comprises the steps of:
if a measured thickness is greater than a defined maximum thickness threshold, removing excess coating material from said blade until the thickness is less than said defined maximum thickness threshold.

6. The method of any preceding claim, wherein the method comprises the step of applying a plurality of wet coating layers, wherein said step of measuring a thickness of a blade coating is performed after application of each layer of said plurality of layers.

7. The method of any preceding claim, wherein the method comprises the step of providing a reflective element as a metallic film or foil, preferably aluminium foil.

8. The method of any preceding claim, wherein said reflective element is provided as a film or foil having an adhesive provided on a surface of said film or foil, wherein said adhesive is used to attach said film or foil to said surface of the wind turbine blade.

9. The method of any preceding claim, wherein the method comprises the step of providing a plurality of discrete reflective elements, preferably spaced along a length of said surface.

10. The method of claim 9, wherein said plurality of discrete reflective elements are provided as substantially circular foil pieces having a diameter of between approximately 20-50 mm.

11. The method of claim 9 or claim 10, wherein said plurality of discrete reflective elements are provided such that the spacing between adjacent elements along the length of the blade is selected so that said reflective elements do not provide a conductive or ionizing path along the length of the blade.

12. The method of claim 11, wherein said plurality of discrete reflective elements are provided such that the spacing between adjacent elements along the length of the blade is at least approximately 500mm.

13. The method of claim 11 or claim 12, wherein said step or providing a plurality of discrete reflective elements comprises providing a tape or strip of reflective material and cutting said tape or strip of reflective material into a plurality of discrete elements.

14. A wind turbine blade having a coating provided on at least a portion of the surface of the wind turbine blade, wherein said coating is applied according to the method of any one of claims 1-13.

15. A wind turbine comprising at least one wind turbine blade as claimed in claims 14.
